Europäisches Patentamt

European Patent Office

Office européen des brevets

(19)

(11) Veröffentlichungsnummer: **0 151 233**
**B1**

(12) **EUROPÄISCHE PATENTSCHRIFT**

(45) Veröffentlichungstag der Patentschrift: 08.08.90

(21) Anmeldenummer: 84113227.7

(22) Anmeldetag: 02.11.84

(51) Int. Cl.⁵: **C 23 C 16/40, C 23 C 16/44,** A 61 C 5/10, A 61 K 6/06

(54) Vorrichtung zum Beschichten eines metallischen Dental-prothesenteils u. Verfahren zum Verbinden eines metallischen Dentalprothesenteils mit Dentalkunststoff.

(30) Priorität: 04.02.84 DE 3403894

(43) Veröffentlichungstag der Anmeldung:
14.08.85 Patentblatt 85/33

(45) Bekanntmachung des Hinweises auf die Patenterteilung:
08.08.90 Patentblatt 90/32

(84) Benannte Vertragsstaaten:
AT CH DE FR GB IT LI SE

(56) Entgegenhaltungen:
EP-A-0 011 148          FR-A-2 178 177
DE-A-1 671 240          FR-A-2 291 736
DE-A-2 647 121          US-A-4 212 663
FR-A-2 012 729          US-A-4 364 731

CHEMICAL ABSTRACTS, Band 83, 1975, Seite 270, Zusammenfassung Nr. 183367f, Columbus, Ohio, US; S. YAMAGUCHI et al.: "Dental alloy based on gold-platinum alloy", & WERKST. KORROS. 1975, 26(5), 356

(73) Patentinhaber: Kulzer GmbH
Philipp-Reis-Strasse 8
D-6393 Wehrheim (TS.)1 (DE)

(72) Erfinder: Göbel, Roland
Heimstättenstrasse 12
DDR - 6900 Jena (DD)
Erfinder: Musil, Rudolf, Prof. Dr.
Gillestrasse 14
DDR - 6900 Jena (DD)
Erfinder: Tiller, Hans-Jürgen, Dr.
Prof.-Ibrahim-Strasse 23
DDR - 6900 Jena (DD)
Erfinder: Oppawsky, Steffen
Gartenfeldstrasse 22 a
D-6380 Bad Homburg (DE)
Erfinder: Schmidt, Albert
Heuchelheimerstrasse 139 a
D-6380 Bad Homburg (DE)
Erfinder: Janda, Rolf, Dr.
Seulbergerstrasse 19
D-6380 Bad Homburg (DE)

(74) Vertreter: Heinen, Gerhard, Dr.
Heraeus Holding GmbH Heraeusstrasse 12-14
D-6450 Hanau am Main (DE)

## Beschreibung

Die Erfindung bezieht sich auf eine Vorrichtung, umfassend ein metallisches Dentalprothesenteil, das an einer Haltevorrichtung im Abstand von einer Siliziumoxidquelle angeordnet ist, und eine Einrichtung zum Beschichten des Prothesenteils mit einer Siliziumoxid-haltigen Haftvermittlerschicht.

Weiterhin bezieht sich die Erfindung auf ein Verfahren zum Verbinden eines metallischen Dentalprothesenteils mit einem Dentalkunststoff, wobei auf das Dentalprothesenteil zunächst eine Siliziumoxid enthaltende Schicht und darauf der Dentalkunststoff aufgebracht werden, das mit der erfindungsgemäßen Vorrichtung durchgeführt wird.

Das Problem der Verbesserung der Haftung von Kunststoffen auf Dentalprothesenteilen aus Metall ist nicht neu. Allerdings wurden in jüngster Zeit Verfahren entwickelt, bei denen zur Lösung dieser Aufgabenstellung auf das metallische Dentalprothesenteil eine Siliziumoxid-haltige Haftvermittlerschicht aufgebracht wird.

Zum Beschichten eines metallischen Dentalprothesenteils wird, wie aus der Zeitschrift "Dental-Labor XXX, Heft 12/82, Seite 1712, hervorgeht, eine Glimmentladungsvorrichtung verwendet. Sie weist eine evakuierbare Kammer auf, in der das Prothesenteil unter Aufrechterhaltung eines Druckes zwischen 0,133 und 0,4 mbar einem Glimmentladungsplasma ausgesetzt wird, dem eine organische Siliziumverbindung, wie Triäthoxymethylsilan, zugesetzt wird.

Auch aus der US-PS 4,364,731 ist es bekannt, metallische Dentalprothesenteile mit einer Siliziumoxid-Haftvermittlerschicht zu beschichten. Zur Beschichtung wird eine mit Radiofrequenz arbeitende Magnetron-Sputtervorrichtung empfohlen. Diese Vorrichtung arbeitet bei einem Druck von $10^{-3}$ mbar. Das Siliziumoxid wird von hochreinem Quarzglas abgesputtert und in der Vakuumkammer auf dem Dentalprothesenteil abgeschieden.

Die bekannten Vorrichtungen erfordern einen erheblichen apparativen Aufwand an teuren Geräten, insbesondere aber wird bei diesen bekannten Vorrichtungen eine evakuierbare Kammer benötigt, in der die Beschichtung der Dentalprothesenteile erfolgt.

Aus der FR-A-21 78 177 ist eine Vorrichtung zur Herstellung von geschmolzener Kieselsäure (Siliziumdioxid) hoher Qualität bekannt. Sie weist einen Flammhydrolysebrenner, der in einem Abstand von im allgemeinen 10 bis 18 cm von einem Dorn angeordnet ist, auf, auf den der durch Flammhydrolyse von Siliziumtetrachlorid erzeugte "Ruß" aus Siliziumdioxidteilchen niedergeschlagen wird. Der Dorn wird dabei rotiert und hin und her vor dem Flammhydrolysebrenner bewegt.

Aufgabe der Erfindung ist es, einerseits eine in ihrem Aufbau einfache und preiswerte Vorrichtung zum Beschichten von metallischen Dentalprothesenteilen zu schaffen, die deren Beschichten in normaler Luftatmosphäre gestattet und sowohl für Dentalprothesenteile aus Edel- oder Unedelmetall-Legierungen geeignet ist, andererseits ein Verfahren zum Verbinden eines metallischen Dentalprothesenteils mit einem Dentalkunststoff unter Verwendung einer solchen Vorrichtung bereitzustellen.

Gelöst wird die Aufgabe für eine Vorrichtung der eingangs charakterisierten Art erfindungsgemäß dadurch, daß die Siliziumoxidquelle wenigstens ein Flammhydrolysebrenner ist, der in einem Abstand von maximal 150 mm vom Dentalprothesenteil angeordnet ist, dessen Flammkegellänge wenigstens 150 mm, maximal 200 mm beträgt, der einen Anschlußstutzen zur dosierten Zufuhr einer in gasförmigem Aggregatzustand befindlichen oxidierbaren Siliziumverbindung aufweist und der so betrieben wird, daß am Ort des zu beschichtenden Dentalprothesenteils die Gasströmungsgeschwindigkeit höchstens 1 m/sec beträgt, die Flammkegellänge den Abstand zwischen Flammhydrolysebrenner und Dentalprothesenteil um höchstens 25% überschreitet, und daß die Haltevorrichtung und der Flammhydrolysebrenner während des Beschichtens relativ zueinander bewegbar sind.

Die sich auf das Verfahren beziehende Aufgabe wird für ein Verfahren zum Verbinden eines metallischen Dentalprothesenteils mit einem Dentalkunststoff, wobei auf das Dentalprothesenteil zunächst eine Siliziumoxid enthaltende Haftvermittlerschicht niedergeschlagen, auf diese eine silanhaltige Schicht und darauf der Dentalkunststoff aufgebracht werden, dadurch gelöst, daß das Dentalprothesenteil in einem Abstand von maximal 150 mm vor einem Flammhydrolysebrenner, dessen Flammkegellänge wenigstens 150 mm beträgt, angeordnet wird, der Flammhydrolysebrenner mit einem kohlenstoffhaltigen Brenngas-Luft-Gemisch betrieben wird, dem eine oxidierbare Siliziumverbindung so dosiert zugeführt wird, daß eine Haftvermittlerschicht auf das Dentalprothesenteil aufgebracht wird, die 5 bis 40 Gewichts-% Kohlenstoff enthält, daß das Dentalprothesenteil während des Beschichtens relativ zum Flammhydrolysebrenner bewegt wird und daß der Flammhydrolysebrenner so betrieben wird, daß die Gasströmungsgeschwindigkeit am Ort des zu beschichtenden Dentalprothesenteils höchstens 1 m/sec beträgt und die Flammkegellänge den Abstand zwischen Flammhydrolysebrenner und Dentalprothesenteil um höchstens 25% überschreitet.

In bevorzugter Ausführungsform ist bei der erfindungsgemäßen Vorrichtung die Haltevorrichtung drehbar gelagert. Damit ist es möglich, das Dentalprothesenteil während des Beschichtens gegenüber dem Flammkegel des Flammhydrolysebrenners zu bewegen, so daß nacheinander verschiedene Flächenteile des Prothesenteils dem Flammkegel ausgesetzt werden können.

Anstelle oder zusätzlich zur drehbaren Lagerung der Haltevorrichtimg ist diese vorteilhafterweise an einem Karussell befestigt. In diesem Fall ist genügend Zeit vorhanden, daß sich das Dentalprothesenteil während eines Umlaufs des Karussells in ausreichendem Maße abkühlen kann, bevor erneut eine dünne Siliziumoxid-haltige Haftvermittlerschicht aufgetragen wird. Zusätzlich kann noch eine mit Luft oder Luft-Wasser-Gemisch gespeiste Kühlvorrichtung in einem Winkelbereich von 20 bis 120°, vorzugsweise um 90°, zum Flammhydrolysebrenner versetzt, beispielsweise neben dem Karussell, angeordnet sein. Um eine bessere Justierung des Dentalprothesenteils in bezug zum Flammkegel des Flammhydrolysebrenners zu gewährleisten, ist das Karussell höhenverstellbar ausgebildet.

Auch die höhenverstellbare Befestigung des Flammhydrolysebrenners an einem Stab trägt zur besseren gegenseitigen Anordnung des Dentalprothesenteils und Flammhydrolysebrenners bei. Eine optimale Einstellung läßt sich damit erzielen, daß der Flammhydrolysebrenner an einer drehbaren und vorschiebbaren Halterung befestigt ist, weil durch Drehung dieser Halterung sowohl seine seitliche als auch höhenmäßige Verstellung ermöglicht wird und durch das Vorschieben ein genauer beschichtungsgerechter Abstand zwischen Vorderkante des Flammhydrolysebrenners und dem Dentalprothesenteil eingestellt werden kann.

Die Einstellmöglichkeit des Flammhydrolysebrenners läßt sich auch noch durch ein Verbindungsgelenk zwischen Stab oder Halterung verbessern.

Bevorzugt ist bei erfindungsgemäß ausgebildeten Vorrichtungen die Anordnung des Flammhydrolysebrenners so getroffen, daß der Flammkegel im wesentlichen horizontal verläuft. Eine Feinregulierung der Brennerflamme wird vorteilhafterweise dadurch erzielt, daß die Größe der Öffnung der Düse des Flammhydrolysebrenners verändert wird. Dies kann bei einem Brenner mit Schlitzdüse durch eine verschiebbare Platte (sog. Messerkante) erfolgen. Bei Brennerdüsen mit einer Düsenöffnung mit kreisförmigem Querschnitt durch Vorschieben oder Zurückziehen eines konus- oder kegelförmig ausgebildeten Schließkörpers.

Der Flammhydrolysebrenner wird vorteilhafterweise mit einem Brenngas-Luft-Gemisch betrieben, wobei als Brenngas vorzugsweise Propangas verwendet wird. Als oxidierbare Siliziumverbindungen können sowohl anorganische Verbindungen, wie beispielsweise $SiH_4$, oder organische Siliziumverbindungen, wie Organosilan, Organooxysilan, Organosiloxan oder ein Gemisch daraus verwendet werden. Sofern die oxidierbare Siliziumverbindung nicht im gasförmigen Aggregatzustand vorliegt, ist sie vor dem Zuführen zum Flammhydrolysebrenner in die Dampfform zu überführen. Es hat sich bewährt, die oxidierbare, in gasförmigem Aggregatzustand vorliegende Siliziumverbindung dem Flammhydrolysebrenner über den gleichen Anschlußstutzen zuzuführen wie die Luft für das Brenngas-Luft-Gemisch.

Um eine reproduzierbare Beschichtung zu erzielen, wird der Flammkegel des Flammhydrolysebrenners zweckmäßigerweise durch Zugabe eines Färbemittels, beispielsweise von flüchtigen Na- oder B-Verbindungen, eingefärbt. Die Zufuhr des Färbemittels erfolgt zweckmäßigerweise über den gleichen Zufuhrstutzen, über den die oxidierbare Siliziumverbindung dosiert in den Flammhydrolysebrenner eingespeist wird.

Die erfindungsgemäße Vorrichtung besitzt den Vorteil, daß sie unter Normalatmosphäre betrieben werden kann. Es hat sich allerdings bewährt, die das zu beschichtende metallische Dentalprothesenteil tragende Haltevorrichtung in einer Kammer anzuordnen, die mit Belüftungsöffnungen, wie beispielsweise Schlitzen, versehen ist, um einen freien Zimmerluftdurchtritt durch die Kammer zu ermöglichen. Dabei kann der Flammhydrolysebrenner in der gleichen Kammer angeordnet sein. Bewährt hat sich aber ebenfalls eine Vorrichtung, bei der der Flammhydrolysebrenner in einer Zusatzkammer angeordnet ist, die während des Beschichtens des Dentalprothesenteils mit der Kammer über eine verschließbare Lochblende in Verbindung steht. Diese Ausbildung der erfindungsgemäßen Vorrichtung bietet bestmöglichen Schutz gegen Brandgefahren.

Mit der erfindungsgemäßen Vorrichtung können sowohl Verfahren durchgeführt werden, bei denen Haftvermittlerschichten aus Siliziumdioxid abgeschieden werden, wie sie in der US-PS 4,364,731 beschrieben sind, als auch das erfindungsgemäße Verfahren, bei dem kohlenstoffhaltige $SiO_x$-Schichten auf Dentalprothesenteilen, in denen der Kohlenstoff vorzugsweise in Form von an Silizium gebundenen Kohlenwasserstoffresten vorliegt. Die kohlenstoffhaltigen $SiOx_x$-Haftvermittlerschichten zeichnen sich gegenüber den Siliziumdioxid-Schichten dadurch besonders aus, daß sie nicht nur bessere Haftwerte zwischen dem Dentalkunststoff und der Metall-Legierung des Prothesenteils gewährleisten, sondern darüber hinaus auch dauerhafte Spaltfreiheit im Mundmilieu, also unter Feuchtigkeit, Wechseltemperaturbeanspruchung und einwirkenden mechanischen Beanspruchungen, sicherstellen. Optimale Ergebnisse werden mit abgeschiedenen Siliziumoxid-haltigen Haftvermittlerschichten erzielt, deren Kohlenstoffgehalt zwischen 5 und 40 Gewichts-% der Haftvermittlerschicht beträgt. Zur Erzielung eines solchen Kohlenstoffgehaltes wird das erfindungsgemäße Verfahren so durchgeführt, daß die zu beschichtenden Dentalprothesenteile durch das vordere Drittel des Flammkegels des Flammhydrolysebrenners hindurchgeführt werden, wobei der Flammhydrolysebrenner mit einem kohlenstoffhaltigen Brenngas-Luft-Gemisch betrieben wird, dem die oben angegebene oxidierbare Siliziumverbindung in gasförmigem Aggregatzustand dosiert beigemischt wird. Es ist für das erfindungsgemäße Verfahren von Vorteil, das zu beschichtende Dentalprothesenteil vor seiner Beschichtung mit der Haftvermittlerschicht zu sandstrahlen. Als Sandstrahlmittel hat sich Korund mit einer mittleren Teilchengröße ≥ 250 µ bewährt.

In den Figuren sind Ausführungsbeispiele der erfindungsgemäßen Vorrichtung schematisch dargestellt, die sich besonders bewährt haben und ihr ein möglichst breites Verwendungsspektrum erschließen.

Es zeigen.

Figur 1 eine Beschichtungsvorrichtung im Vertikalschnitt;

Figur 2 einen Flammhydrolysebrenner mit Doppelbrennkopf;

Figur 3 einen Flammhydrolysebrenner mit verstellbarer Düsenöffnung.

In einer Kammer 1, deren Decke und deren Boden sowie deren Zwischenwand 1' mit Belüftungsöffnungen 2 versehen sind, sind die Dentalprothesenteile 3 angeordnet. Sie sind an Haltevorrichtungen 4 befestigt, die in durchgehende Bohrungen hineingesteckt sind und dort mittels Feststellschrauben 6 gehaltert sind. Die Haltevorrichtungen 4 können auch biegbar ausgebildet sein, um die Einstellung des Dentalprothesenteils in bezug zum Flammhydrolysebrenner 11 zu verbessern. Die Drehachse 7 des Karussells 5 wird von dem Motor 8, wie durch Pfeil 9 angedeutet, gedreht. Um das Dentalprothesenteil 3 optimal zum Flammkegel 10 des Flammhydrolysebrenners 11 anzuordnen, ist das Karussell 5, wie durch Pfeil 12 angedeutet, höhenverstellbar und mit der Stellschraube 13 in der gewünschten Höhe arretierbar. Die Drehachse 7 des Karussells 5 kann aber auch im wesentlichen parallel zum Flammhydrolysebrenner angeordnet sein. Der Flammhydrolysebrenner ist in dem Ausführungsbeispiel in der Lochblende 14 einer Trennkammerwand 15 angeordnet und kann in die Zusatzkammer 16 der Kammer 1 zurückbewegt werden, wenn die Beschichtungsvorrichtung außer Betrieb ist. Die Lochblende 14 wird in diesem Fall dann vorteilhafterweise mit einem Abdeckteil 17, das, wie durch die Pfeile 18 angedeutet, nach oben und unten verschiebbar ist, verschlossen werden. Der Flammhydrolysebrenner wird über die Zufuhrleitung 19 mit Luft und der Anschlußstutzen 20 mit dem Brenngas, vorteilhafterweise Propangas, gespeist, wobei der Luft die oxidierbare Siliziumverbindung im gasförmigen Aggregatzustand zugemischt ist. Der Flammhydrolysebrenner 11 ist über ein Verbindungsgelenk 21 an einer Halterung 22 befestigt, die, wie durch Pfeile 23 angedeutet, von Hand gedreht und, wie durch Pfeile 24 angedeutet, vor- oder zurückgeschoben werden kann. Die optimale Betriebsstellung wird dann mittels der Stellschraube 25 arretiert. Wie aus der Darstellung ersichtlich, ist der Flammhydrolysebrenner während des Beschichtungsvorganges so ausgerichtet, daß sein Flammkegel 10 im wesentlichen horizontal verläuft. Der maximale Abstand zwischen der dem zu beschichtenden Prothesenteil zugekehrten Vorderkante des Brenners und dem davon am weitesten entfernten Bereich des Prothesenteils 3 beträgt maximal 150 mm. Die Länge des Flammkegels 10 beträgt wenigstens 150 mm, maximal 200 mm. In dem Ausführungsbeispiel ist innerhalb der Kammer 1, und zwar um 90° zur Richtung des Flammkegels 10 versetzt, noch eine Kühlvorrichtung 26 angeordnet.

Die Beschichtung der Dentalprothesenteile 3 erfolgt nun wie nachstehend beschrieben:

Nachdem der Flammhydrolysebrenner 11 in seine Betriebsstellung in die Lochblende 14 der Trennkammerwand 15 eingebracht wurde, wird zunächst eine optimale Einstellung zwischen dem dem Flammhydrolysebrenner direkt gegenüberliegenden Dentalprothesenteil 3 vorgenommen, und zwar durch Höhenverstellung der Drehachse 7 des Karussells 5 und/oder durch Verschieben (Höhenverstellung und/oder Drehen) des Halteteils 4 in der Bohrung im Karussell 5 und/oder Drehen und/oder Vorschieben der Halterung 22. Nach dieser Optimierung der gegenseitigen Lage von Flammhydrolysebrenner 11 und Dentalprothesenteil 3 wird das Karussell 5 in eine langsame Drehbewegung versetzt, beispielsweise von 30 U/min. Danach wird die Luft- und Brenngaszufuhr sowie Zufuhr der oxidierbaren Siliziumverbindung zum Flammhydrolysebrenner freigegeben und der Flammhydrolysebrenner gezündet. Die umlaufenden Dentalprothesenteile 3 werden dann nacheinander vom Flammkegel 10 des Flammhydrolysebrenners 11 beaufschlagt und die Siliziumoxid-haltige Haftvermittlerschicht auf dem Dentalprothesenteil 3 niedergeschlagen. Im allgemeinen wird die Umlaufgeschwindigkeit des Karussells 5 so bemessen, daß ein beschichtetes Dentalprothesenteil 3 sich während eines Umlaufs in ausreichendem Maße abkühlt, ehe es erneut dem Flammkegel 10 zum Niederschlagen einer weiteren dünnen Siliziumoxid-haltigen Haftvermittlerschicht ausgesetzt wird. Die Abkühlung kann jedoch noch durch die von der Kühlvorrichtung 26 auf das Dentalprothesenteil 3 gelangende Kühlluft oder ein Luft-Wasser-Gemisch verbessert werden. Die Kühlvorrichtung 26 ist zu diesem Zweck vorteilhafterweise als Schlitzdüse ausgebildet mit vertikal verlaufendem Schlitz 27. Nachdem auf die Dentalprothesenteile 3 eine ausreichende Dicke Siliziumoxid-haltiger Haftvermittlerschicht aufgebracht ist, wird die Luft- und Brenngaszufuhr zum Flammhydrolysebrenner unterbrochen und dieser in die Teilkammer 16 zurückgezogen und die Lochblende 14 mittels Abdeckteil 17 verschlossen. Die beschichteten Dentalprothesenteile 3 werden dann der Kammer 1 entnommen und können beispielsweise, wie aus der US-PS 4,364,731 bekannt, weiterbearbeitet werden, d.h. mit einem handelsüblichen Dentalkunststoff unter Anbringung einer beispielsweise silanhaltigen Schicht verbunden werden.

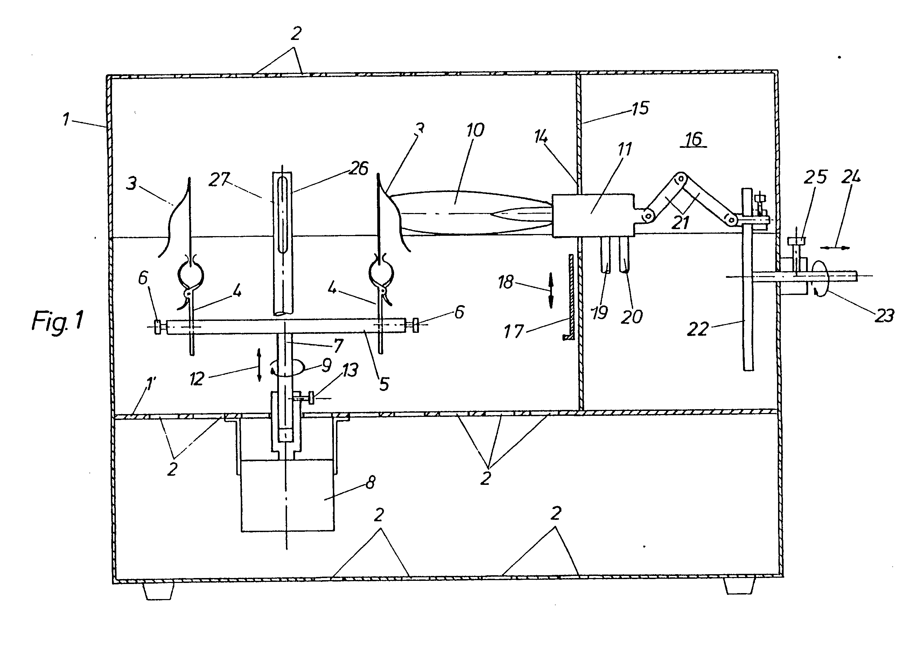

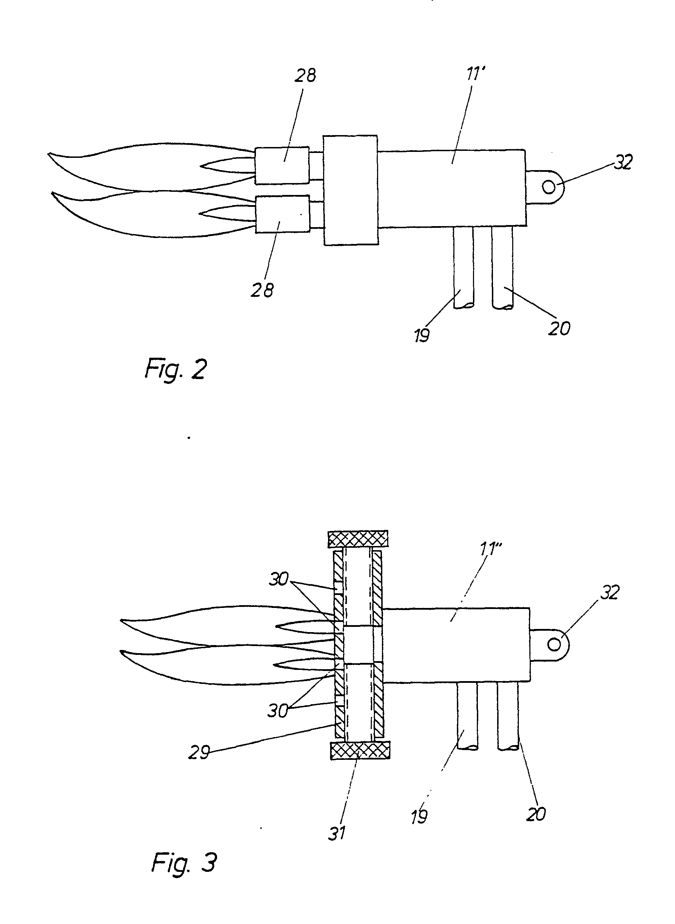

Die Figuren 2 und 3 zeigen schematische Ausführungen von Flammhydrolysebrennern, die anstelle des Flammhydrolysebrenners 11 gemäß Figur 1 verwendet werden können und über die Verbindungslasche 32 an dem Verbindungsgelenk 21 befestigt sind.

Der in Figur 2 dargestellte Flammhydrolysebrenner 11' unterscheidet sich von dem in Figur 1 dargestellten Flammhydrolysebrenner 11 dadurch, daß er als Doppelbrenner ausgebildet ist, wobei die beiden Brennköpfe 28, wie dargestellt, übereinander angeordnet sind. Es ist aber auch möglich, die beiden Brennköpfe 28 seitlich nebeneinander anzuordnen.

Der in Figur 3 dargestellte Flammhydrolysebrenner 11'' unterscheidet sich von dem Flammhydrolysebrenner 11 gemäß Figur 1 in der Weise, daß er eine Düsenöffnung 29 aufweist, die mehrere Austrittsdüsenöffnungen 30 besitzt. Die Düsenöffnungen 30 bzw. die Zahl der Düsenöffnungen 30 ist mittels der Verschlußkörper 31 veränderbar.

**Patentansprüche**

1. Vorrichtung, umfassend ein metallisches Dentalprothesenteil, das an einer Haltevorrichtung im Abstand von einer Siliziumoxidquelle angeordnet ist, und eine Einrichtung zum Beschichten des Prothesenteils mit einer Siliziumoxid-haltigen Haftvermittlerschicht, dadurch gekennzeichnet, daß die Siliziumoxidquelle wenigstens ein Flammhydrolysebrenner (11) ist, der in einem Abstand von maximal 150 mm vom Dentalprothesenteil (3) angeordnet ist, dessen Flammkegellänge wenigstens 150 mm, maximal 200 mm beträgt, der einen Anschlußstutzen (20) zur dosierten Zufuhr einer in gasförmigem Aggregatzustand befindlichen oxidierbaren Siliziumverbindung aufweist und der so betrieben wird, daß am Ort des zu beschichtenden Dentalprothesenteils (3) die Gasströmungsgeschwindigkeit höchstens 1 m/sec beträgt, die Flammkegellänge den Abstand zwischen Flammhydrolysebrenner und Dentalprothesenteil um höchstens 25% überschreitet, und daß die Haltevorrichtung (4) und der Flammhydrolysebrenner (11) während des Beschichtens relativ zueinander bewegbar sind.

2. Vorrichtung nach Anspruch 1, dadurch gekennzeichnet, daß die Haltevorrichtung (4) drehbar gelagert ist.

3. Vorrichtung nach den Ansprüchen 1 und/oder 2, dadurch gekennzeichnet, daß die Haltevorrichtung (4) an einem Karussell (5) befestigt ist.

4. Vorrichtung nach Anspruch 3, dadurch gekennzeichnet, daß das Karussell (5) höhenverstellbar (Pfeile 12) ist.

5. Vorrichtung nach einem oder mehreren der vorhergehenden Ansprüche, dadurch gekennzeichnet, daß der Flammhydrolysebrenner (11) an einem Stab höhenverstellbar befestigt ist.

6. Vorrichtung nach einem oder mehreren der Ansprüche 1 bis 4, dadurch gekennzeichnet, daß der Flammhydrolysebrenner (11) an einer drehbaren Halterung (22) befestigt ist.

7. Vorrichtung nach den Ansprüchen 5 oder 6, dadurch gekennzeichnet, daß sie zwischen Flammhydrolysebrenner (11) und Stab oder Halterung (22) ein Verbindungsgelenk (21) aufweist.

8. Vorrichtung nach einem oder mehreren der vorhergehenden Ansprüche, dadurch gekennzeichnet, daß der Flammhydrolysebrenner (11) so ausgerichtet ist, daß sein Flammkegel (10) im wesentlichen horizontal verläuft.

9. Vorrichtung nach einem oder mehreren der vorhergehenden Ansprüche, dadurch gekennzeichnet, daß der Flammhydrolysebrenner (11) wenigstens eine in ihrer Größe veränderbare Düsenöffnung (30) aufweist.

10. Vorrichtung nach einem oder mehreren der vorhergehenden Ansprüche, dadurch gekenn

zeichnet, daß sie eine Kühlvorrichtung (26) in einem Winkelbereich von 20 bis 120° zum Flammhydrolysebrenner versetzt aufweist.

11. Vorrichtung nach einem oder mehreren der vorhergehenden Ansprüche, dadurch gekennzeichnet, daß die Haltevorrichtung (4) in einer mit Belüftungsöffnungen (2) versehenen Kammer (1) angeordnet ist.

12. Vorrichtung nach Anspruch 11, dadurch gekennzeichnet, daß der Flammhydrolysebrenner (11) in der Kammer (1) angeordnet ist.

13. Vorrichtung nach Anspruch 11, dadurch gekennzeichnet, daß der Flammhydrolysebrenner (11) in einer Zusatzkammer (16) angeordnet ist, die mit der Kammer (1) während des Beschichtens über eine Lochblende (14) in Verbindung steht.

14. Vorrichtung nach einem oder mehreren der vorhergehenden Ansprüche, dadurch gekennzeichnet, daß der Flammhydrolysebrenner (11) zwei neben- oder übereinander angeordnete Brennköpfe (28) aufweist.

15. Vorrichtung nach einem oder mehreren der vorhergehenden Ansprüche, dadurch gekennzeichnet, daß der Flammhydrolysebrenner einen Zufuhrstutzen für ein Mittel zum Färben des Flammkegels aufweist.

16. Vorrichtung nach Anspruch 1, dadurch gekennzeichnet, daß die Haltevorrichtung (4) biegbar ausgebildet ist.

17. Verfahren zum Verbinden eines metallischen Dentalprothesenteils mit einem Dentalkunststoff, wobei auf das Dentalprothesenteil zunächst eine Siliziumoxid enthaltende Haftvermittlerschicht niedergeschlagen, auf diese eine silanhaltige Schicht und darauf der Dentalkunststoff aufgebracht werden, dadurch gekennzeichnet, daß das Dentalprothesenteil in einem Abstand von maximal 150 mm vor einem Flammhydrolysebrenner, dessen Flammkegellänge wenigstens 150 mm beträgt, angeordnet wird, der Flammhydrolysebrenner mit einem kohlenstoffhaltigen Brenngas-Luft-Gemisch betrieben wird, dem eine oxidierbare Siliziumverbindung so dosiert zugeführt wird, daß eine Haftvermittlerschicht auf das Dentalprothesenteil aufgebracht wird, die 5 bis 40 Gewichts-% Kohlenstoff enthält, daß das Dentalprothesenteil während des Beschichtens relativ zum Flammhydrolysebrenner bewegt wird und daß der Flammhydrolysebrenner so betrieben wird, daß die Gasströmungsgeschwindigkeit am Ort des zu beschichtenden Dentalprothesenteils höchstens 1 m/sec beträgt und die Flammkegellänge den Abstand zwischen Flammhydrolysebrenner und Dentalprothesenteil um höchstens 25% überschreitet.

18. Verfahren nach Anspruch 17, dadurch gekennzeichnet, daß das Dentalprothesenteil durch das vordere Drittel des Flammkegels des Flammhydrolysebrenners geführt wird.

19. Verfahren nach Anspruch 17, dadurch gekennzeichnet, daß die oxidierbare Siliziumverbindung dem Flammhydrolysebrenner in gasförmigem Aggregatzustand zugeführt wird.

20. Verfahren nach Anspruch 17, dadurch gekennzeichnet, daß das Dentalprothesenteil vor dem Niederschlagen der Haftvermittlerschicht gesandstrahlt wird.

**Revendications**

1. Dispositif qui comporte une pièce de prothèse dentaire métallique qui est disposée sur un dispositif de support à distance d'une source d'oxyde de silicium, et une installation pour revêtir la pièce de prothèse d'une couche de promoteur d'adhésion contenant de l'oxyde de silicium, caractérisé en ce que la source d'oxyde de silicium est constituée par au moins un brûleur pour hydrolyse par flamme (11) qui est disposé à une distance d'au plus 150 mm de la pièce de prothèse dentaire (3), dont la longueur de cône de flamme est d'au moins 150 mm et d'au plus 200 mm, qui présente une tubulure de raccordement (20) pour l'introduction dosée d'un composé du silicium oxydable qui se trouve à l'état gazeux, et qui fonctionne de telle façon qu'au niveau de la pièce de prothèse dentaire (3) qui doit être revêtue la vitesse du courant de gaz est d'au plus 1 m/s, la longueur du cône de flamme dépasse la distance entre le brûleur pour hydrolyse par flamme et la pièce de prothèse dentaire d'au plus 25%, et en ce que le dispositif de support (4) et le brûleur pour hydrolyse par flamme (11) sont déplaçables l'un par rapport à l'autre au cours du revêtement.

2. Dispositif selon la revendication 1, caractérisé en ce que le dispositif de support (4) est rotatif.

3. Dispositif selon les revendications 1 et/ou 2, caractérisé en ce que le dispositif de support (4) est fixé sur un carrousel (5).

4. Dispositif selon la revendication 3, caractérisé en ce que le carrousel (5) est réglable en hauteur (flèche 12).

5. Dispositif selon l'une des revendications précédentes, caractérisé en ce que le brûleur pour hydrolyse par flamme (11) est fixé sur une barre de façon à être réglable en hauteur.

6. Dispositif selon l'une des revendications 1 à 4, caractérisé en ce que le brûleur pour hydrolyse par flamme (11) est fixé sur un support rotatif (22).

7. Dispositif selon les revendications 5 ou 6, caractérisé en ce qu'il présente une articulation de liaison (21) entre le brûleur pour hydrolyse par flamme (11) et la barre ou support (22).

8. Dispositif selon l'une des revendications précédentes, caractérisé en ce que le brûleur pour hydrolyse par flamme (11) est disposé de telle façon que son cône de flamme (10) est sensiblement horizontal.

9. Dispositif selon l'une des revendications précédentes, caractérisé en ce que le brûleur pour hydrolyse par flamme (11) présente au moins une ouverture de buse (30) dont la taille est modifiable.

10. Dispositif selon l'une des revendications précédentes, caractérisé en ce qu'il présente un dispositif de refroidissement (26) décalé par rapport au brûleur pour hydrolyse par flamme d'un angle de 20 à 120°.

11. Dispositif selon l'une des revendications précédentes, caractérisé en ce que le dispositif de support (4) est disposé dans une chambre (1) munie d'ouvertures d'aération (2).

12. Dispositif selon la revendication 11, caractérisé en ce que le brûleur pour hydrolyse par flamme (11) est disposé dans la chambre (1).

13. Dispositif selon la revendication 11, caractérisé en ce que le brûleur pour hydrolyse par flamme (11) est disposé dans une chambre supplémentaire (16) qui communique avec la chambre (1) au cours du revêtement par l'intermédiaire d'un obturateur à orifice (14).

14. Dispositif selon l'une des revendications précédentes, caractérisé en ce que le brûleur pour hydrolyse par flamme (11) présente deux têtes de brûleur (28) disposées l'une à côté de l'autre ou l'une au-dessus de l'autre.

15. Dispositif selon l'une des revendications précédentes, caractérisé en ce que le brûleur pour hydrolyse par flamme présente une tubulure d'alimentation pour un agent de coloration du cône de flamme.

16. Dispositif selon la revendication 1, caractérisé en ce que le dispositif de support (4) est flexible.

17. Procédé pour lier une pièce de prothèse dentaire métallique à une matière synthétique dentaire, dans lequel une couche de promoteur d'adhésion contenant de l'oxyde de silicium est d'abord déposée sur la pièce de prothèse dentaire, une couche contenant du silane est ensuite appliquée sur cette couche et une matière synthétique dentaire est appliquée sur la couche contenant du silane, caractérisé en ce que la pièce de prothèse dentaire est disposée à une distance d'au plus 150 mm devant un brûleur pour hydrolyse par flamme dont la longueur de cône de flamme est d'au moins 150 mm, le brûleur pour hydrolyse par flamme fonctionne avec un mélange de gaz combustible contenant du carbone et d'air auquel est ajouté de façon dosée un composé oxydable du silicium de telle façon qu'une couche de promoteur d'adhésion est appliquée sur la pièce de prothèse dentaire qui contient de 5 à 40% en poids de carbone, en ce que la pièce de prothèse dentaire est déplacée par rapport au brûleur pour hydrolyse par flamme au cours du revêtement et que le brûleur pour hydrolyse par flamme fonctionne de telle façon que la vitesse du courant gazeux au niveau de la pièce de prothèse dentaire qui doit être revêtue est d'au plus 1 m/s et que la longueur du cône de flamme dépasse la distance entre le brûleur pour hydrolyse par flamme et la pièce de prothèse dentaire d'au plus 25%.

18. Procédé selon la revendication 17, caractérisé en ce que la pièce de prothèse dentaire est introduite dans le tiers avant du cône de flamme du brûleur pour hydrolyse par flamme.

19. Procédé selon la revendication 17, caractérisé en ce que le composé oxydable du silicium est introduit à l'état gazeux dans le brûleur pour hydrolyse par flamme.

20. Procédé selon la revendication 17, caractérisé en ce que la pièce de prothèse dentaire est soumise à un sablage avant le dépôt de la couche de promoteur d'adhésion.

**Claims**

1. Device, comprising a metallic dental prosthesis piece, which is arranged on a holding device at a distance from a silicon dioxide source, and an apparatus for the coating of the prosthesis piece with a layer of adhesion agent containing silicon dioxide, characterized in that the silicon dioxide source is at least one flame hydrolysis burner (11), which is arranged at a maximum distance of 150 mm from the dental prosthesis piece (3), the flame taper length of which is at least 150 mm, and a maximum of 200 mm, which has a connecting socket (20) for the dosaged supply of an oxidizable silicon compound in gaseous state and which is operated such that at the site of the dental prosthesis piece (3) which is to be coated, the speed of gas flow is a maximum of 1 m/sec, the flame taper length exceeds the distance between the flame hydrolysis burner and the dental prosthesis piece by a maximum of 25%, and that the holding device (4) and the flame hydrolysis burner (11) are movable relative to each other during the coating operation.

2. Device according to Claim 1, characterized in that the holding device (4) is rotatably mounted.

3. Device according to Claims 1 and/or 2, characterized in that the holding device (4) is attached to a carrousel (5).

4. Device according to Claim 3, characterized in that the carrousel (5) is vertically adjustable (arrows 12).

5. Device according to one or more of the preceding Claims, characterized in that the flame hydrolysis burner (11) is attached to a bar in a vertically adjustable manner.

6. Device according to one or more of Claims 1 to 4, characterized in that the flame hydrolysis burner (11) is attached to a rotatable mounting (22).

7. Device according to Claims 5 or 6, characterized in that it has a connecting joint (21) between the flame hydrolysis burner (11) and the bar or mounting (22).

8. Device according to one or more of the preceding Claims, characterized in that the flame hydrolysis burner (11) is aligned such that its flame taper (10) runs substantially horizontally.

9. Device according to one or more of the preceding Claims, characterized in that the flame hydrolysis burner (11) has at least one nozzle opening (30) which is adjustable with respect to its size.

10. Device according to one or more of the preceding Claims, characterized in that it has a cooling device (26) which is staggered with respect to the flame hydrolysis burner at an angle range of from 20 to 120°.

11. Device according to one or more of the preceding Claims, characterized in that the holding device (4) is arranged in a chamber (1) which is provided with ventilation openings (2).

12. Device according to Claim 11, characterized in that the flame hydrolysis burner (11) is arranged in the chamber (1).

13. Device according to Claim 11, characterized in that the flame hydrolysis burner (11) is arranged in an additional chamber (16), which communicates with the chamber (1) via an apertured partition (14) during the coating operation.

14. Device according to one or more of the preceding Claims, characterized in that the flame hydrolysis burner (11) has two burner heads (28) arranged adjacent to each other or one above the other.

15. Device according to one or more of the preceding Claims, characterized in that the flame hydrolysis burner has a supply connection for a medium for colouring the flame taper.

16. Device according to Claim 1, characterized in that the holding device (4) is constructed so as to be able to be bent.

17. Method for connecting a metallic dental prosthesis piece with a dental plastics material, in which a layer of adhesion agent containing silicon dioxide is firstly deposited onto the dental prosthesis piece, onto this layer, a layer containing silane and thereafter the dental plastics material are applied, characterized in that the dental prosthesis piece is arranged at a maximum distance of 150 mm in front of a flame hydrolysis burner, the flame taper length of which is at least 150 mm, the flame hydrolysis burner is driven by a combustion gas/air mixture containing carbon, to which an oxidizable silicon compound is fed in a dosaged manner such that a layer of adhesion agent containing 5 to 40% by weight carbon is applied onto the dental prosthesis piece, that the dental prosthesis piece is moved relative to the flame hydrolysis burner during the coating operation, and that the flame hydrolysis burner is operated such that the speed of gas flow at the site of the dental prosthesis piece which is to be coated is 1 m/sec and the flame taper length exceeds the distance between the flame hydrolysis burner and the dental prosthesis piece by a maximum of 25%.

18. Method according to Claim 17, characterized in that the dental prosthesis piece is carried through the front third of the flame taper of the flame hydrolysis burner.

19. Method according to Claim 17, characterized in that the oxidizable silicon compound is fed to the flame hydrolysis burner in gaseous state.

20. Method according to Claim 17, characterized in that the dental prosthesis piece is sandblasted before the layer of adhesion agent is deposited.

Fig. 1

Fig. 2

Fig. 3